# EUROPEAN PATENT SPECIFICATION

(11) **EP 4 127 027 B1**
(45) Date of publication and mention of the grant of the patent: **30.04.2025**
(21) Application number: 21727007.3
(22) Date of filing: 25.03.2021
(51) Int. Cl.: C08G 75/02, C08G 75/025, C08K 3/00, C08L 81/02

(54) **A METHOD FOR THE PREPARATION OF POLY(PHENYLENE SULFIDE)**
VERFAHREN ZUR HERSTELLUNG VON POLYPHENYLENSULFID
PROCÉDÉ DE PRÉPARATION DE POLY(SULFURE DE PHÉNYLÈNE)

(30) Priority: 31.03.2020 PL 43339720
(43) Date of publication of application: 08.02.2023
(73) Proprietor: Siec Badawcza Lukasiewicz - Instytut Ciezkiej Syntezy Organicznej "Blachownia", 47-225 Kedzierzyn-Kozle (PL); Grupa Azoty Polskie Konsorcjum Chemiczne Sp. z o. o., 33-101 Tarnów (PL); Grupa Azoty Kopalnie I Zaklady Chemiczne Siarki "Siarkopol" S. A., 28-200 Staszów (PL)
(72) Inventor: WARZALA, Marek, 33-131 Leg Tarnowski (PL); NOSAL, Hanna, 45-065 Opole (PL); STANCZYK, Dorota, 47-220 Kedzierzyn-Kozle (PL); LEDNIOWSKA, Kerstin, 47-244 Solarnia (PL); STEMPINSKI, Edward, 47-230 Kedzierzyn-Kozle (PL); ELIAS, Bernard, 47-230 Kedzierzyn-Kozle (PL); NOWICKI, Janusz, 47-220 Kedzierzyn-Kozle (PL); ROBASZKIEWICZ, Andrzej, 85-088 Bydgoszcz (PL); MATUS, Grzegorz, 47-220 Kedzierzyn-Kozle (PL); KUDLA, Stanislaw, 47-232 Kedzierzyn-Kozle (PL); NOWAKOWSKA-BOGDAN, Ewa, 47-303 Krapkowice (PL); KRZYSIAK-WARZALA, Barbara, 47-223 Kedzierzyn-Kozle (PL); SEMENIUK, Izabela, 47-224 Kedzierzyn-Kozle (PL); KOCZWARA, Zbigniew, 32-830 Wojnicz (PL); KANIA, Jan, 33-100 Tarnów (PL); PIENKOWSKI, Kamil, 30-515 Kraków (PL); MIJAL, Witold, 33-101 Tarnów (PL); MISKA, Marcin, 28-200 Staszów (PL); CZERW, Rafa, 28-200 Staszów (PL); MOLAS, Elzbieta, 28-142 Tuczepy (PL); MAZUR, Marta, 28-200 Staszów (PL); SNOPKIEWICZ, Zbigniew, 28-200 Staszów (PL)
(74) Representative: Pietruszynska, Elzbieta
(86) International application number: PCT/PL2021/050018
(87) International publication number: WO 2021/201707

(56) References cited:
- EP-A1- 1 849 834
- EP-A2- 0 480 685
- CN-A- 106 893 102
- JP-A- 2009 179 757
- JP-A- 2017 071 752
- JP-A- H04 222 834

## Description

The subject-matter of the invention is a method for the preparation of poly(phenylene sulfide) to be used in plastics processing industry.

Poly(phenylene sulfide) (PPS) is widely used for manufacturing of products in electrotechnical and electronic, and automotive industry as well as for manufacturing of chemical equipment parts with high resistance to aggressive media. In addition, PPS as polymer has high resistance to elevated temperature and very good mechanical properties. However, a use of rather complex manufacturing procedures is needed to obtain such a material.

In known approaches used on an industrial scale, a process for manufacturing of poly(phenylene sulfide) is based on the polycondensation reaction of p-dichlorobenzene and sodium sulfide in a polar solvent as the medium. From the resulting post-reaction mixture, the obtained polymer is separated from side products and impurities in a subsequent step. For example, a polycondensation process is conducted at elevated temperature and pressure according to the approach from US3354129. The polymer thus obtained has a linear structure, low molecular weight and insufficient thermomechanical parameters. The applicability of the thus obtained polymer without additional processes, which modify its properties, is very limited. The main reason is a low molecular weight (which is not higher than 250,000 g/mol in standard processes) and low melt viscosity, therefore, the polymer cannot be processed using injection techniques.

A method for increasing the molecular weight of the polymer is known by adding various lithium compounds, such as halides (US4038263), hydroxide (US4451643, US5635587) and also lithium salts of carboxylic acids (US5929203). Unfortunately, lithium compounds are not cheap. Additional processes are required for their recovery.

In addition, copper compounds in the form of halides may be incorporated into the reaction system to increase the molecular weight of the polymer, as suggested by the authors of the methods according to CN104744698 or CN104744699.

Patent US9567440, in turn, describes a process carried out using agents that facilitate the progress of the polycondensation reaction, known as promoters. In this case, they are sodium salts of short C5-C6 fatty acids that show much better solubility in the reaction medium than inorganic salts. The weight average molecular weight of the obtained material exceeds 40,000 g/mol, and its parameters enable use in fiber production. However, in target industrial methods, it is still necessary to separate and recover used auxiliary substances. This makes the manufacturing process much more complex and increases costs.

The authors of the application US20160168357 suggest an approach that involves formation of a composition of pure poly(phenylene sulfide) and cyclic oligomers that serve as nucleating agents. The oligomers are obtained as a side product in the process of poly(phenylene sulfide) synthesis. The composition is obtained after separation and purification of pure poly(phenylene sulfide) and respective oligomers through separate manufacturing pathways and remixing the thus obtained materials, but no longer in the reaction system, which prolongs the whole procedure for manufacturing a polymer with expected parameters.

Even though the basis for the reaction that yields the product is relatively simple, the preparation of PPS is a multi-stage and complex process. There are many ways to carry out the process, and they result in products with varied properties. These processes not always lead to a polymer with desired properties, and they require expensive raw materials or auxiliary materials, or they are highly complex and difficult to perform.

It is a well-known fact, for example, that it is very difficult to obtain a polymer which has both high molecular weight and crystallinity resulting only from the polymer structure associated with higher length of chain segments that have to occupy adequate positions to form a more ordered structure (E. Ha 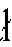 asa, Polimery, 1999, 2, 79). Poly(phenylene sulfide) has an ability to form a crystalline phase, and mechanical properties of the polymer improve with a higher degree of crystallinity (and molecular weight). A high degree of crystallinity of poly(phenylene sulfide) is responsible for effects, such as small material deformation even with high mechanical loads. It is also known that the thermal stability of a polymer increases with a higher degree of crystallinity [R. Porowski, Zeszyty Naukowe SGSP 2017, 64 (4), 67-90].

JPH04222834A discloses a process for producing an aromatic sulfide polymer by dehalogenation / sulfurization reaction of a dihaloaromatic compound with a metal sulphide, by using, in an aprotic solvent, an alkali metal hydrosulfide compound, an alkali metal hydroxide compound and a substantially anhydrous alkali metal sulfide.

CN106893102A discloses a method for preparing polyphenylene sulfide by using synthetic mother liquid as a solvent, sodium sulfide pentahydrate and 1,4-dichlorobenzene as raw materials, and sodium hydroxide as auxiliary agent. The main component of the synthetic mother liquor is N-methylpyrrolidone. The liquor further contains a catalyst and a low molecular weight polyphenylene sulphide.

JP2017071752A discloses a method for producing a polyarylene sulfide by reacting a polyhaloaromatic compound and a sulfiding agent in an organic polar solvent to obtain a mixture containing at least a polyarylene sulfide resin and the organic polar solvent. Preferably, the polar organic solvent further contains a carboxyalkylamino group-containing compound.

The object of the invention was a method for the preparation of poly(phenylene sulfide) which has simultaneously high molecular weight (not lower than 40,000 g/mol) and a degree of crystallinity of at least 60 %, at a good yield and without a need for using additional complex procedures in the synthetic process.

The method for the preparation of poly(phenylene sulfide), which involves a reaction between an alkaline metal hydrosulfide and 1,4-dichlorobenzene in a polar solvent, and which is carried out such that the alkaline metal hydrosulfide is successively prepared by dissolving and then mixing an alkaline metal hydroxide and the alkaline metal hydrosulfide in demineralized water, and then N-methylpyrrolidone, as a polar solvent, and additives that ensure an adequate reaction medium such as aqueous acetic acid solution are added, and then excess water is removed by distillation, is characterized in that a silicate suspension in a solution of 1,4-dichlorobenzene with N-methylpyrrolidone is added to the thus obtained system, the mean silicate grain size is not higher than 10 µm, and then polycondensation is performed for 2 to 10 hours at a temperature ranging from 220 to 270 °C, and a post-reaction mixture is obtained, from which a polymer is then separated, which is in turn purified and dried. 1,4-dichlorobenzene is the principal organic raw material in the polymer synthesis. In addition, the silicate is a nucleating agent already during the polycondensation reaction. As a result, a polymer is obtained with a molecular weight not lower than 40,000 g/mol and content of the crystalline phase of at least 60 %, with a yield at a level of at least 90 %.

Preferably, the silicate used in the suspension in the solution of 1,4-dichlorobenzene with N-methylpyrrolidone has a mean grain size ranging from 0.1 to 1 µm.

Equally preferably or more preferably, the silicate used in the suspension in the solution of 1,4-dichlorobenzene with N-methylpyrrolidone is talc. The use of talc, a silicate with low hardness, reduces the risk of damage or quick wear of equipment having movable elements, such as stirrers in the polycondensation reactor.

Preferably, besides the silicate suspension in the solution of 1,4-dichlorobenzene with N-methylpyrrolidone, other bifunctional monomers are added to the system, such as 1,2-trichlorobenzene, 1,3-trichlorobenzene, or trifunctional monomers, such as 1,2,5-trichlorobenzene or 1,2,4 trichlorobenzene. Use of them enables obtaining a polymer with branched structure, which has an effect of a greater molecular weight, and thus polymer viscosity in the melt phase increases.

Preferably, the polycondensation is carried out at a temperature of from 230 to 265 °C.

Equally preferably or even more preferably, the polycondensation is carried out for 4 to 7 hours.

Preferably, the polymer is separated from the post-reaction mixture by washing it with water at least twice, and thereafter the polymer is precipitated and separated from the aqueous solution by filtration. This way, inorganic substances are washed away from the polymer. The water used for washing may be reused.

More preferably, washing with water is carried out three times.

Approvingly, the polymer separated from the post-reaction mixture is purified such that it is distributed in a diluted organic acid solution, preferably acetic acid at a concentration of from 2 to 10 wt. %, then it is separated from the acid solution by filtration, and then the polymer is washed twice with hot water.

More preferably, the polymer separated from the acid solution and washed with hot water is further purified such that low-molecular weight impurities are extracted with acetone and filtered. The acetone may be reused after being filtered out.

Preferably, the polymer is dried at a temperature not exceeding 140 °C, in a vacuum dryer in reduced pressure conditions of below 1 mbar, to obtain a product in the powder form with moisture content not higher than 0.05 %.

### Example 1

4593.8 g of N-methylpyrrolidone, 1584.5 g of solid sodium hydrosulfide NaSH with the main ingredient content of 71.3 % dissolved in 793.9 g of water, 806.3 g of sodium hydroxide NaOH dissolved in 1123 g of water and sodium acetate solution prepared by dissolving 520 g of sodium acetate hydrate in 105.0 g of water are added to a pressure reactor manufactured from titanium with a volume of 16 dm³ and fitted with an anchor stirrer, a temperature sensor, a condenser and a receiver.

After loading the reactor, a dehydration process is conducted at atmospheric pressure, with the stirrer on (300 revolutions per minute) and with low-rate nitrogen purging, and the temperature is gradually increased to 195 °C and maintained for 3 hours. Water formed in the reaction and other volatile ingredients of the reaction mixture, including N-methylpyrrolidone, which is partially distilled with water, are collected in the receiver.

Then, the reactor contents are cooled to a temperature of 170 °C, and then a solution of 3000.7 g of 1,4-dichlorobenzene and 1886 g of N-methylpyrrolidone is added to the system. The reactor contents are purged with nitrogen, the system is hermetically sealed and heating is started with constant stirring: it is first heated to a temperature of 200 °C, and then heating continues to a temperature of 230 °C and it is maintained at that temperature for 3 h; then, temperature is increased to 255 °C and the process is conducted at that temperature for 2.5 h. After the reaction has been completed, the reactor is left to cool spontaneously, and the crude product is removed from the reactor. Then, the polymer is purified. The polymer is first washed three times with water in a total quantity of 6 kg of water per batch. To reduce water consumption, recycled water from filtrate from the previous batch is also used during first and second washing. Third washing is carried out with pure distilled water. The polymer is then washed with 6 kg of 5 % aqueous acetic acid solution, and then twice with hot distilled water in a quantity of 6 kg per batch, wherein recycled water from the second stage of this washing of a previous batch is used for the first washing. In the last stage of purification, the polymer is washed three times with acetone in a quantity of 3 kg of fresh acetone per batch. To reduce acetone consumption, recycled streams from a process performed earlier are also used for the purification.

The purified product is dried in a vacuum tray dryer at a temperature of 120 °C, until vacuum below 2 mbar is obtained (approx. 17 h). During drying, the acetone condensate is collected, and then separated from water and impurities by distillation and recycled back to polymer purification in the next batch.

2019.0 g (yield: 91.6 %) of the polymer as white powder is obtained, with a molecular weight of 33,300 g/mol, polydispersity index Pd = 2.1, degree of crystallinity of 57.7 %, chlorine content of 0.31 wt. % and moisture content below 0.05 wt. %.

### Example 2

4593.8 g of N-methylpyrrolidone, 1584.5 g of solid NaSH with the main ingredient content of 71.3 % dissolved in 793.9 g of water, 806.3 g of NaOH dissolved in 1123 g of water and sodium acetate solution prepared by dissolving 520 g of sodium acetate hydrate in 105.0 g of water are added to a pressure reactor manufactured from titanium with a volume of 16 dm³ and fitted with an anchor stirrer, a temperature sensor, a condenser and a receiver.

After loading the reactor, the dehydration process is conducted at atmospheric pressure with the stirrer on (300 revolutions per minute) and with low-rate nitrogen purging, and then the temperature is gradually increased to 195 °C, and then maintained for 3 hours. Water formed and other volatile ingredients of the reaction mixture, including N-methylpyrrolidone, are collected in the receiver.

Then, the reactor contents are cooled to a temperature of 170 °C and a suspension of 5.25 g of talc with an average grain size of 1 µm is added in a solution of 3000.7 g of 1,4-dichlorobenzene and 1886 g of N-methylpyrrolidone. The reactor contents are purged with nitrogen, the system is hermetically sealed and heating is started. While stirring, the contents are heated to a temperature of 200 °C, then heating continues to a temperature of 230 °C and it is maintained at that temperature for 3 h; and then, temperature is increased to 255 °C and the process is conducted at that temperature for 2.5 h. After the reaction has been completed, the reactor is left to cool spontaneously, and the crude product is removed from the reactor. Then, the polymer is purified. The polymer is first washed three times with water in a total quantity of 6 kg of water per batch. To reduce water consumption, recycled water from filtrate from the previous batch is also used during first and second washing. Third washing is carried out with pure distilled water. The polymer is then washed with 6 kg of 5 % aqueous acetic acid solution, and then twice with hot distilled water in a quantity of 6 kg per batch, wherein recycled water from the second stage of this washing of a previous batch is used for the first washing. In the last stage of purification, the polymer is washed with acetone in a quantity of 3 kg of fresh acetone per batch. To reduce acetone consumption, recycled streams from such a purification process performed earlier are also used for the purification. The dried product is dried in a tray vacuum dryer at a temperature of 120 °C, until vacuum below 2 mbar is obtained (approx. 17 h). During drying, the acetone condensate is collected, and then separated from water and impurities by distillation and recycled back to polymer purification in the next batch.

2035.1 g (yield: 92.3 %) of the polymer as white powder is obtained, with a molecular weight of 40,800 g/mol, polydispersity index Pd = 1.55, degree of crystallinity of 71.1 %, chlorine content of 0.32 wt. % and moisture content below 0.05 wt. %.

### Example 3

4593.8 g of N-methylpyrrolidone, 1584.5 of g solid NaSH with the main ingredient content of 71.3 % dissolved in 793.9 g of water, 806.3 g of NaOH dissolved in 1123 g of water and sodium acetate solution prepared by dissolving 520 g of sodium acetate hydrate in 105.0 g of water are added to a pressure reactor manufactured from titanium with a volume of 16 dm³ and fitted with an anchor stirrer, a temperature sensor, a condenser and a receiver.

After loading the reactor, dehydration is conducted at atmospheric pressure with the stirrer on (300 revolutions per minute) and with low-rate nitrogen purging. Temperature is gradually increased to 195 °C and maintained for 3 hours. Water formed in the reaction and other volatile ingredients of the reaction mixture, including N-methylpyrrolidone, are collected in the receiver.

Then, the reactor contents are cooled to a temperature of 170 °C and suspension of 5.25 g of talc with an average grain size of 1 µm is added in a solution of 3000.7 g of 1,4-dichlorobenzene and 1886.25 g of N-methylpyrrolidone. The reactor contents are purged with nitrogen, the system is hermetically sealed and heating is started. The reactor contents are continuously stirred and first heated to a temperature of 200 °C and heating continues to a temperature of 230 °C and it is maintained at that temperature for 3 h, and then temperature is increased to 255 °C and the process is conducted at that temperature for 1.5 h. Then, with intensive stirring, a solution of 19.55 g of 1,3,5-trichlorobenzene in 264 g of N-methylpyrrolidone is added to the reactor from a dispenser located above the reactor using compressed nitrogen, and the whole contents are stirred for another hour.

After the reaction has been completed, the reactor is left to cool spontaneously, and the crude product is removed from the reactor, additionally grinded and purified as described in Example 2.

Then, the purified product is dried in a tray vacuum dryer at a temperature of 120 °C, until vacuum below 2 mbar is obtained (approx. 17 h).

1989.1 g of polymer is obtained (yield: 90.2 %) as white-gray power with molecular weight of 61,100 g/mol, polydispersity index Pd = 8.62, degree of crystallinity of 62.7 %, chlorine content of 0.31 wt. % and moisture content below 0.05 wt. %.

## Claims

1. A method for the preparation of poly(phenylene sulfide), which involves a reaction between an alkaline metal hydrosulfide and 1,4-dichlorobenzene in a polar solvent, and which is performed such that the alkaline metal hydrosulfide is successively obtained by dissolving and then mixing an alkaline metal hydroxide and the alkaline metal hydrosulfide in demineralized water, then N-methylpyrrolidone and additives that ensure an adequate reaction medium, such as aqueous acetic acid salt solution, are then added, and then excess water is removed by distillation, **characterized in that** a silicate suspension in a solution of 1,4-dichlorobenzene with N-methylpyrrolidone is added to the thus obtained system, the mean silicate grain size is not higher than 10 µm, and then polycondensation is performed for 2 to 10 hours at a temperature ranging from 220 to 270 °C, and a post-reaction mixture is obtained, from which a polymer is then separated, which is in turn purified and dried.

2. The method according to claim 1, **characterized in that** the silicate used in the suspension in the solution of 1,4-dichlorobenzene with N-methylpyrrolidone has a mean grain size ranging from 0.1 to 1 µm.

3. The method according to claim 1 or 2, **characterized in that** the silicate used in the suspension in the solution of 1,4-dichlorobenzene with N-methylpyrrolidone is talc.

4. The method according to claim 1, **characterized in that** besides the silicate suspension in the solution of 1,4-dichlorobenzene with N-methylpyrrolidone, other bifunctional monomers are added to the system, such as 1,2-trichlorobenzene, 1,3-trichlorobenzene, or trifunctional monomers, such as 1,2,5-trichlorobenzene or 1,2,4 trichlorobenzene.

5. The method according to claim 1, **characterized in that** the polycondensation is carried out at a temperature of from 230 to 265 °C.

6. The method according to claim 1 or 5, **characterized in that** the polycondensation is carried out for 4 to 7 hours.

7. The method according to claim 1, **characterized in that** the polymer is separated from the post-reaction mixture by washing it with water at least twice, and the polymer thereafter is precipitated and separated from the aqueous solution by filtration.

8. The method according to claim 7, **characterized in that** washing with water is carried out three times.

9. The method according to claim 1, **characterized in that** the polymer separated from the post-reaction mixture is purified such that it is distributed in a diluted organic acid solution, preferably acetic acid at a concentration of from 2 to 10 wt. %, then it is separated from the acid solution by filtration, and then the polymer is washed twice with hot water.

10. The method according to claim 9, **characterized in that** the polymer separated from the acid solution and washed with hot water is further purified such that low-molecular weight impurities are extracted with acetone and filtered.

11. The method according to claim 1, **characterized in that** the polymer is dried at a temperature not higher than 140 °C, in a vacuum dryer, in reduced pressure conditions of below 1 mbar, to obtain a product in the powder form with moisture content not higher than 0.05 %.

## Patentansprüche

1. Verfahren zur Herstellung von Poly(phenylensulfid), das eine Reaktion zwischen einem Alkalimetallhydrogensulfid und 1,4-Dichlorbenzol in einem polaren Lösungsmittel umfasst und so durchgeführt wird, dass das Alkalimetallhydrogensulfid sukzessive durch Auflösen und anschließendes Vermischen eines Alkalimetallhydroxids und des Alkalimetallhydrogensulfids in demineralisiertem Wasser erhalten wird, danach N-Methylpyrrolidon und Additive, die ein geeignetes Reaktionsmedium sicherstellen, wie z. B. wässrige Essigsäuresalzlösung, zugesetzt werden und anschließend überschüssiges Wasser durch Destillation entfernt wird, **dadurch gekennzeichnet, dass** dem auf diese Weise erhaltenen System eine Silikatsuspension in einer Lösung von 1,4-Dichlorbenzol mit N-Methylpyrrolidon zugesetzt wird, die mittlere Silikatkorngröße nicht höher als 10 µm ist, und anschließend eine Polykondensation für 2 bis 10 Stunden bei einer Temperatur im Bereich von 220 bis 270 °C durchgeführt und ein Nachreaktionsgemisch erhalten wird, von dem dann ein Polymer abgetrennt wird, das wiederum gereinigt und getrocknet wird.

2. Verfahren nach Anspruch 1, **dadurch gekennzeichnet, dass** das in der Suspension in der Lösung von 1,4-Dichlorbenzol mit N-Methylpyrrolidon verwendete Silikat eine mittlere Korngröße im Bereich von 0,1 bis 1 µm aufweist.

3. Verfahren nach Anspruch 1 oder 2, **dadurch gekennzeichnet, dass** das in der Suspension in der Lösung von 1,4-Dichlorbenzol mit N-Methylpyrrolidon verwendete Silikat Talk ist.

4. Verfahren nach Anspruch 1, **dadurch gekennzeichnet, dass** neben der Silikatsuspension in der Lösung von 1,4-Dichlorbenzol mit N-Methylpyrrolidon dem System weitere bifunktionelle Monomere, wie 1,2-Trichlorbenzol, 1,3-Trichlorbenzol, oder trifunktionelle Monomere, wie 1,2,5-Trichlorbenzol oder 1,2,4-Trichlorbenzol, zugesetzt werden.

5. Verfahren nach Anspruch 1, **dadurch gekennzeichnet, dass** die Polykondensation bei einer Temperatur von 230 bis 265 °C durchgeführt wird.

6. Verfahren nach Anspruch 1 oder 5, **dadurch gekennzeichnet, dass** die Polykondensation von 4 bis 7 Stunden durchgeführt wird.

7. Verfahren nach Anspruch 1, **dadurch gekennzeichnet, dass** das Polymer durch mindestens zweimaliges Waschen mit Wasser vom Nachreaktionsgemisch abgetrennt wird und das Polymer anschließend durch Filtration von der wässrigen Lösung ausgefällt und abgetrennt wird.

8. Verfahren nach Anspruch 7, **dadurch gekennzeichnet, dass** das Waschen mit Wasser dreimal durchgeführt wird.

9. Verfahren nach Anspruch 1, **dadurch gekennzeichnet, dass** das vom Nachreaktionsgemisch abgetrennte Polymer so gereinigt wird, dass es in einer verdünnten organischen Säurelösung, vorzugsweise Essigsäure, in einer Konzentration von 2 bis 10 Gew.-% verteilt wird, danach durch Filtration von der Säurelösung abgetrennt und anschließend zweimal mit heißem Wasser gewaschen wird.

10. Verfahren nach Anspruch 9, **dadurch gekennzeichnet, dass** das von der Säurelösung abgetrennte und mit heißem Wasser gewaschene Polymer weiter gereinigt wird, indem niedermolekulare Verunreinigungen mit Aceton extrahiert und gefiltert werden.

11. Verfahren nach Anspruch 1, **dadurch gekennzeichnet, dass** das Polymer bei einer Temperatur von nicht mehr als 140 °C in einem Vakuumtrockner unter reduzierten Druckbedingungen von unter 1 mbar getrocknet wird, um ein Produkt in Pulverform mit einem Feuchtigkeitsgehalt von nicht mehr als 0,05 % zu erhalten.

## Revendications

1. Procédé de préparation de poly(sulfure de phénylène), qui implique une réaction entre un hydrosulfure de métal alcalin et le 1,4-dichlorobenzène dans un solvant polaire, et qui est réalisé de telle sorte que l'hydrosulfure de métal alcalin est obtenu successivement par dissolution puis mélange d'un hydroxyde de métal alcalin et de l'hydrosulfure de métal alcalin dans de l'eau déminéralisée, puis de la N-méthyl-pyrrolidone et des additifs qui assurent un milieu réactionnel adéquat, tels qu'une solution aqueuse de sel d'acide acétique, sont ensuite ajoutés, puis l'excès d'eau est éliminé par distillation, **caractérisé en ce qu'**une suspension de silicate dans une solution de 1,4-dichlorobenzène avec de la N-méthyl-pyrrolidone est ajoutée au système ainsi obtenu, la taille moyenne des grains de silicate n'est pas supérieure à 10 µm, puis une polycondensation est réalisée pendant 2 à 10 heures à une température comprise entre 220 et 270 °C, et un mélange post-réactionnel est obtenu, à partir duquel un polymère est ensuite séparé, qui est à son tour purifié et séché.

2. Procédé selon la revendication 1, **caractérisé en ce que** le silicate utilisé dans la suspension dans la solution de 1,4-dichlorobenzène avec N-méthyl-pyrrolidone a une taille moyenne des grains comprise entre 0,1 et 1 µm.

3. Procédé selon la revendication 1 ou 2, **caractérisé en ce que** le silicate utilisé dans la suspension dans la solution de 1,4-dichlorobenzène avec N-méthyl-pyrrolidone est le talc.

4. Procédé selon la revendication 1, **caractérisé en ce qu'**en plus de la suspension de silicate dans la solution de 1,4-dichlorobenzène avec N-méthyl-pyrrolidone, d'autres monomères bifonctionnels sont ajoutés au système, tels que le 1,2-trichlorobenzène, le 1,3-trichlorobenzène, ou des monomères trifonctionnels, tels que le 1,2,5-trichlorobenzène ou le 1,2,4-trichlorobenzène.

5. Procédé selon la revendication 1, **caractérisé en ce que** la polycondensation est effectuée à une température de 230 et 265 °C.

6. Procédé selon la revendication 1 ou 5, **caractérisé en ce que** la polycondensation est effectuée pendant 4 à 7 heures.

7. Procédé selon la revendication 1, **caractérisé en ce que** le polymère est séparé du mélange post-réactionnel par lavage à l'eau au moins deux fois, puis le polymère est précipité et séparé de la solution aqueuse par filtration.

8. Procédé selon la revendication 7, **caractérisé en ce que** le lavage à l'eau est effectué trois fois.

9. Procédé selon la revendication 1, **caractérisé en ce que** le polymère séparé du mélange post-réactionnel est purifié de telle sorte qu'il est réparti dans une solution dilueé d'acide organique, de préférence d'acide acétique à une concentration de 2 à 10 % en poids, puis il est séparé de la solution acide par filtration, puis le polymère est lavé deux fois à l'eau chaude.

10. Procédé selon la revendication 9, **caractérisé en ce que** le polymère séparé de la solution acide et lavé à l'eau chaude est davantage purifié de telle sorte que les impuretés de faible poids moléculaire sont extraites à l'acétone et filtrées.

11. Procédé selon la revendication 1, **caractérisé en ce que** le polymère est séché à une température ne dépassant pas 140 °C, dans un sécheur sous vide, dans des conditions de pression réduite inférieure à 1 mbar, pour obtenir un produit sous forme de poudre avec une teneur en humidité ne dépassant pas 0,05 %.
